# EUROPEAN PATENT APPLICATION

(11) **EP 4 438 567 A1**
(43) Date of publication of application: **02.10.2024**
(21) Application number: 22800055.0
(22) Date of filing: 19.05.2022
(51) Int. Cl.: C02F 1/58, C02F 1/467, C02F 1/461, C02F 1/20, B01D 53/22

(54) **ELECTROCHEMICAL WATER TREATMENT APPARATUS FOR RECOVERING HIGH-CONCENTRATION AMMONIA NITROGEN**

(30) Priority: 25.11.2021 KR 20210164337
(71) Applicant: Korea Institute of Science and Technology, Seoul 02792 (KR)
(72) Inventor: SONG, Kyung Guen, Seoul 02792 (KR); AN, Byung Min, Seoul 02792 (KR)
(74) Representative: advotec.
(86) International application number: PCT/KR2022/007154
(87) International publication number: WO 2023/096042

(57) **Abstract**

The present disclosure relates to an electrochemical water treatment apparatus for recovering high concentration ammonia nitrogen by converting ammonium ion (NH₄⁺) contained in raw water to gaseous ammonia (NH₃) through electrochemical reaction, and separating the gaseous ammonia (NH₃) from the raw water, thereby effectively recovering high concentration ammonia nitrogen from the raw water, and the electrochemical water treatment apparatus for recovering high concentration ammonia nitrogen according to the present disclosure includes an oxidation reaction tank, a reduction reaction tank and an ammonia recovery tank arranged adjacent to one another in a sequential order, wherein a cation exchange membrane is interposed between the oxidation reaction tank and the reduction reaction tank, a gas permeable membrane is interposed between the reduction reaction tank and the ammonia recovery tank, the oxidation reaction tank accommodates an oxidation electrode and an electrolyte solution to produce hydrogen ion (H⁺) when power is applied, and the reduction reaction tank accommodates raw water containing ammonia nitrogen and a reduction electrode to produce hydroxide ion (OH⁻) and convert ammonium ion (NH₄⁺) in the raw water to gaseous ammonia (NH₃) when the power is applied.

## Description

### [Technical Field]

This research is conducted under the support of Ministry of Agriculture, Food and Rural Affairs (Research No. 1545024518, Authority specialized in research management is Korea Institute of Planning and Evaluation for Technology in Food, Agriculture and Forestry, Research project name is "smart farm cross-departmental collaboration package innovation technology development (R&D)", Research name is "nitrogen reduction in anaerobic digestate by electrodialysis", Research period is April 1, 2021-December 31, 2021).

The present disclosure relates to an electrochemical water treatment apparatus for recovering high concentration ammonia nitrogen, and more particularly, to an electrochemical water treatment apparatus for recovering high concentration ammonia nitrogen by converting ammonium ion (NH₄⁺) contained in raw water to gaseous ammonia (NH₃) through electrochemical reaction, and separating the gaseous ammonia (NH₃) from the raw water, thereby effectively recovering ammonia nitrogen from the raw water.

### [Background Art]

There are many methods used to remove and recover ammonia nitrogen from water, for example, air stripping, enhanced biological treatment, adsorption, electrodialysis, electrochemical oxidation or the like. Among them, the most widely used method is air stripping and the air stripping method is wellestablished technology used for a long time and is effective in removing ammonia nitrogen.

Ammonia present in water has equilibrium concentrations of ammonium ion (NH₄⁺) and gaseous ammonia (NH₃) at a pH of about 9.25 (see the following Reaction formula 1), and when the pH rises from about 9.25, ammonium ion (NH₄⁺) is converted to gaseous ammonia (NH₃).

(Reaction formula 1) NH₄⁺ + OH⁻ **→** NH₃ + H₂O

The air stripping method uses this principle, and may convert ammonium ion (NH₄⁺) to gaseous ammonia (NH₃) by increasing the pH of target water, and separate the converted gaseous ammonia (NH₃) from the target water using air to remove ammonia nitrogen from the target water. However, the air stripping method requires high energy consumption due to the continuous air supply during the process and the use of large amount of steam due to the high water temperature of about 60°C or above.

### [RELATED LITERATURES]

### [PATENT LITERATURE]

(Patent Literature 1) Korean Patent No. 2044195 (published on December 5, 2019)
(Patent Literature 2) Korean Patent No. 1866425 (published on June 12, 2018)

### [Disclosure]

### [Technical Problem]

The present disclosure is designed to solve the above-described problem, and therefore the present disclosure is directed to providing an electrochemical water treatment apparatus for removing and recovering ammonia nitrogen by converting ammonium ion (NH₄⁺) contained in raw water to gaseous ammonia (NH₃) through electrochemical reaction, and separating the gaseous ammonia (NH₃) from the raw water, thereby effectively removing high concentration ammonia nitrogen from the raw water.

The present disclosure is further directed to providing technology for the removal and recovery of high concentration ammonia nitrogen from raw water by inducing the dissolution of gaseous ammonia (NH₃) separated from the raw water in a phosphoric acid solution and its use in fertilizer applications.

### [Technical Solution]

To achieve the above-described objective, an electrochemical water treatment apparatus for removing and recovering high concentration ammonia nitrogen according to the present disclosure includes an oxidation reaction tank, a reduction reaction tank and an ammonia recovery tank arranged adjacent to one another in a sequential order, wherein a cation exchange membrane is interposed between the oxidation reaction tank and the reduction reaction tank, a gas permeable membrane is interposed between the reduction reaction tank and the ammonia recovery tank, the oxidation reaction tank accommodates an oxidation electrode and an electrolyte solution to produce hydrogen ion (H⁺) when power is applied, and the reduction reaction tank accommodates raw water containing ammonia nitrogen and a reduction electrode to produce hydroxide ion (OH⁻) and convert ammonium ion (NH₄⁺) in the raw water to gaseous ammonia (NH₃) when the power is applied.

The gaseous ammonia (NH₃) produced in the reduction reaction tank moves to the ammonia recovery tank through the gas permeable membrane.

The ammonia recovery tank accommodates a recovery solution, and the gaseous ammonia (NH₃) passing through the gas permeable membrane is captured in the recovery solution.

The recovery solution is a phosphoric acid solution, the gaseous ammonia (NH₃) passing through the gas permeable membrane is converted to ammonium ion (NH₄⁺) in the phosphoric acid solution, and the recovery solution is a solution of ammonium ion (NH₄⁺) and phosphate salt (HPO₄-).

The electrochemical water treatment apparatus further includes a raw water supply tank on one side of the reduction reaction tank to supply the raw water containing ammonia nitrogen to the reduction reaction tank.

The hydrogen ion (H⁺) produced in the oxidation reaction tank moves to the reduction reaction tank through the cation exchange membrane, the hydroxide ion (OH⁻) is produced in the reduction reaction tank by a reaction of the following Formula 2, and the gaseous ammonia (NH₃) is produced by a reaction of the following Formula 4:

(Formula 2) O₂ + 2H₂O + 4e⁻ → 4OH⁻

(Formula 4) OH⁻ + NH₄⁺ → NH₃ + H₂O.

### [Advantageous Effects]

The electrochemical water treatment apparatus for removing and recovering high concentration ammonia nitrogen according to the present disclosure has the following effect.

It is possible to effectively recover high concentration ammonia nitrogen without any chemical for pH adjustment and a large amount of air by combining electrochemical reaction with the air stripping method using the pH dependent equilibrium of ammonium ion (NH₄⁺) and gaseous ammonia (NH₃).

### [Description of Drawings]

FIG. 1 is a configuration diagram of an electrochemical water treatment apparatus for removing and recovering high concentration ammonia nitrogen according to an embodiment of the present disclosure.
FIG. 2 is a diagram illustrating reaction in each reaction tank of FIG. 1.
FIG. 3 shows the experimental results of conductivity characteristics of each reaction tank over time.
FIG. 4 shows the experimental results of pH changes of each reaction tank over time.
FIG. 5A is an image showing an anaerobic digestate effluent in initial condition contained in a reduction reaction tank, and FIG. 5B is an image showing the condition in 5 hours after power of 20 mA/cm² is applied.

### [Best Mode]

The present disclosure proposes technology to effectively recover high concentration ammonia nitrogen from water by combining the principle of the air stripping method with electrochemical reaction.

As previously mentioned in the 'Background Art', the air stripping method typically used to remove and recover ammonia nitrogen from water makes use of the pH dependent equilibrium (see Reaction formula 1) of ammonium ion (NH₄⁺) and gaseous ammonia (NH₃) and can effectively convert ammonium ion (NH₄⁺) in water to gaseous ammonia (NH₃) through pH adjustment, but it requires a large amount of air and a wide device area for the separation process of gaseous ammonia (NH₃) as well as a large amount of chemical for the pH adjustment.

The present disclosure produces hydroxide ion (OH⁻) through electrochemical reaction to adjust the pH of raw water and induce the conversion of ammonium ion (NH₄⁺) to gaseous ammonia (NH₃), and separates the produced gaseous ammonia (NH₃) using a gas permeable membrane.

Since the pH of the raw water is adjusted by the hydroxide ion (OH⁻) produced by electrochemical reaction, it does not require any chemical for pH adjustment such as lime, and since gaseous ammonia (NH₃) is separated by the gas permeable membrane, it does not require a large amount of air as opposed to the air stripping method.

Hereinafter, an electrochemical water treatment apparatus for recovering high concentration ammonia nitrogen according to an embodiment of the present disclosure will be described in detail with reference to the accompanying drawings.

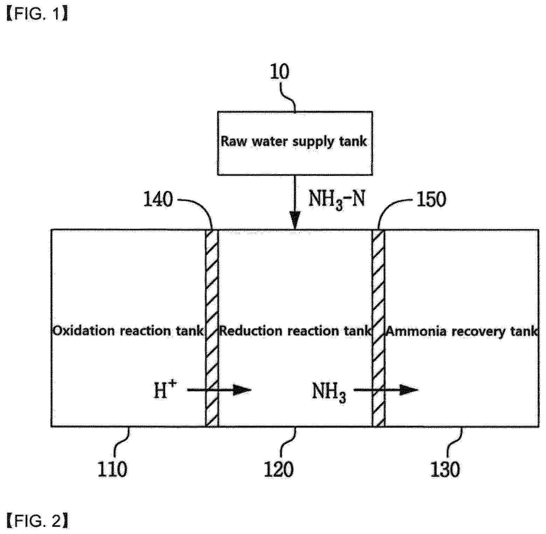

Referring to FIGS. 1 and 2, the electrochemical water treatment apparatus for recovering high concentration ammonia nitrogen according to an embodiment of the present disclosure includes an oxidation reaction tank 110, a reduction reaction tank 120 and an ammonia recovery tank 130.

The anode called oxidation electrode is positioned in the oxidation reaction tank 110 filled with an electrolyte solution and the cathode called reduction electrode is positioned in the reduction reaction tank 120 to which raw water containing high concentration ammonia nitrogen is supplied, and when power is applied to the anode and the cathode, hydroxide ion (OH⁻) is produced in the reduction reaction tank 120, and as the pH of the raw water rises by the produced hydroxide ion (OH⁻), ammonium ion (NH₄⁺) contained in the raw water is converted to gaseous ammonia (NH₃). The gaseous ammonia (NH₃) produced in the reduction reaction tank 120 moves to the ammonia recovery tank 130.

Specifically, the oxidation reaction tank 110 and the reduction reaction tank 120 are positioned adjacent to each other, and a cation exchange membrane 140 is interposed between the oxidation reaction tank 110 and the reduction reaction tank 120. Additionally, the ammonia recovery tank 130 is positioned on one side of the reduction reaction tank 120 with a gas permeable membrane 150 interposed between them. That is, the oxidation reaction tank 110, the reduction reaction tank 120 and the ammonia recovery tank 130 are arranged adjacent to one another in a sequential order, and the cation exchange membrane 140 is interposed between the oxidation reaction tank 110 and the reduction reaction tank 120, and the gas permeable membrane 150 is interposed between the reduction reaction tank 120 and the ammonia recovery tank 130. Additionally, a raw water supply tank 10 is positioned on one side of the reduction reaction tank 120 to supply the raw water to the reduction reaction tank 120.

As described above, when the oxidation reaction tank 110 is filled with the electrolyte solution and the reduction reaction tank 120 is supplied with the raw water containing high concentration ammonia nitrogen, upon the application of power, gaseous ammonia (NH₃) is produced through a series of chemical reactions, and the chemical reaction in each of the oxidation reaction tank 110 and the reduction reaction tank 120 and the movement of ions and gaseous ammonia (NH₃) are as follows.

First, in the case of the oxidation reaction tank 110, water (H₂O) which is the liquid component of the electrolyte solution is decomposed into hydrogen ion (H⁺) and electron (e⁻) by the reaction of the following Formula 1 under the presence of the electrolyte. The hydrogen ion (H⁺) produced in the oxidation reaction tank 110 moves to the reduction reaction tank 120 through the cation exchange membrane 140. The electrolyte solution fed into the oxidation reaction tank 110 is not limited to a particular type, but may include an aqueous solution of Na₂HPO₄.

(Formula 1) 2H₂O → O₂ + 4H⁺ + 4e⁻

In the reduction reaction tank 120, hydroxide ion (OH⁻) is produced by the reaction of the following Formula 2 and the hydrogen ion (H⁺) moved from the oxidation reaction tank 110 is reduced to hydrogen (H₂) by the reaction of Formula 3. Additionally, the hydroxide ion (OH⁻) produced by the reaction of Formula 2 reacts with the ammonium ion (NH₄⁺) present in the raw water to produce gaseous ammonia (NH₃) (see formula 4). As mentioned in the 'Background Art', ammonium ion (NH₄⁺) and gaseous ammonia (NH₃) are in equilibrium at the pH of about 9.25 (see reaction formula 1), and as the hydroxide ion (OH⁻) is continuously produced by the reaction of Formula 2, the ammonium ion (NH₄⁺) is converted to gaseous ammonia (NH₃).

The gaseous ammonia (NH₃) produced by the reaction of Formula 4 moves to the ammonia recovery tank 130 through the gas permeable membrane 150. The gas permeable membrane 150 is a type of gas-liquid separation membrane, and does not allow liquid components to pass through but allows gaseous components to pass through the pores in the gas permeable membrane 150.

(Formula 2) O₂ + 2H₂O + 4e⁻ → 4OH⁻

(Formula 3) 2H⁺ + 2e⁻ → H₂

(Formula 4) OH⁻ + NH₄⁺ → NH₃ + H₂O

The ammonia recovery tank 130 captures the gaseous ammonia (NH₃) which is produced in the reduction reaction tank 120 and moves through the gas permeable membrane 150, and to capture the gaseous ammonia (NH₃), the ammonia recovery tank 130 is pre-filled with a recovery solution. Accordingly, the gaseous ammonia (NH₃) moving to the ammonia recovery tank 130 through the gas permeable membrane 150 is captured in a dissolved state in the recovery solution in the ammonia recovery tank 130.

The recovery solution may include various types of aqueous solutions, and in an embodiment, considering the use in liquid fertilizer applications, a solution containing at least one of phosphoric acid, sulfuric acid or nitric acid may be used. When a phosphoric acid containing solution is used for the recovery solution, a solution of ammonium ion (NH₄⁺) and phosphate salt (HPO₄⁻) may be used as a liquid fertilizer, when a sulfuric acid containing solution is used for the recovery solution, a solution of ammonium ion (NH₄⁺) and sulfate salt (SO₄²⁻) may be used as a liquid fertilizer, and when a nitric acid containing solution is used for the recovery solution, a solution of ammonium ion (NH₄⁺) and nitrate salt (NO₃⁻) may be used for a liquid fertilizer. When a hydrogen containing solution is applied as the recovery solution, the gaseous ammonia (NH₃) passing through the gas permeable membrane 150 is converted to ammonium ion (NH₄⁺) by the reaction with hydrogen ion (H⁺) in the recovery solution (see formula 5).

(Formula 5) NH₃ + H⁺ → NH₄⁺

The electrochemical water treatment apparatus for recovering high concentration ammonia nitrogen according to an embodiment of the present disclosure has been hereinabove described. Hereinafter, the present disclosure will be described in more detail through experimental examples.

### [Mode for Invention]

### <Experimental example: conductivity characteristics, pH characteristics and ammonia nitrogen recovery characteristics>

6 wt% Na₂HPO₄ aqueous solution as the electrolyte solution is fed into the oxidation reaction tank, and an anaerobic digestate effluent is fed into the reduction reaction tank. A titanium electrode coated with iridium is used for the oxidation electrode, and a titanium electrode is used for the reduction electrode. 0.2 M H₃PO₄ aqueous solution is used for the recovery solution of the ammonia recovery tank.

Power is applied in each condition of 20 mA/cm² and 10 mA/cm² to determine the conductivity characteristics and the ammonia nitrogen recovery characteristics of each reaction tank over time.

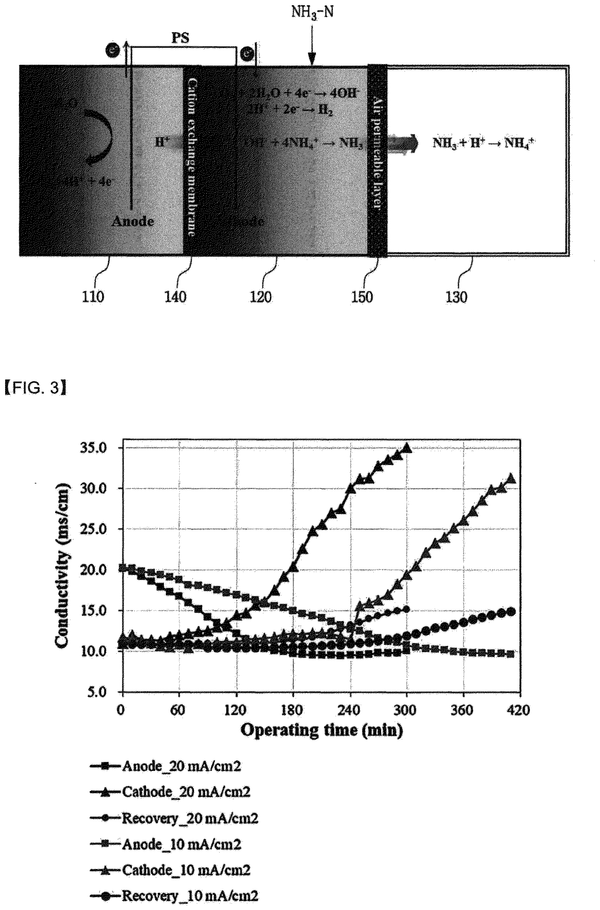

Referring to FIG. 3, it can be seen that when the power of 20 mA/cm² and 10 mA/cm² is applied, in both cases, the conductivity of the reduction reaction tank increases and the conductivity of the oxidation reaction tank decreases over time. It can be seen through these results that hydrogen ion (H⁺) produced in the oxidation reaction tank smoothly moves to the reduction reaction tank.

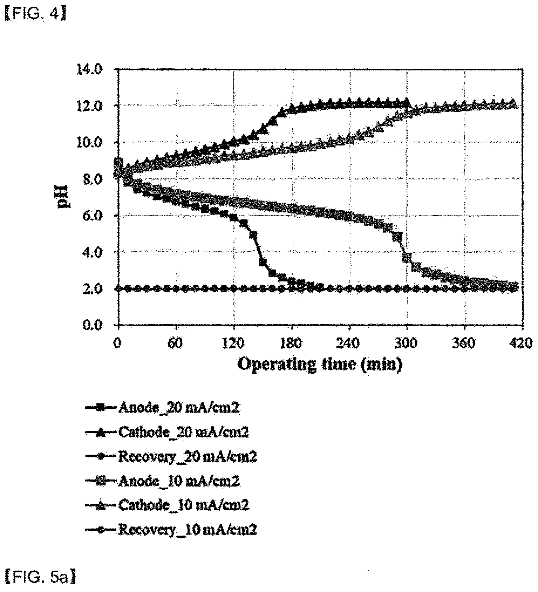

Additionally, referring to FIG. 4, it can be seen that the pH in the reduction reaction tank increases and the pH in the oxidation reaction tank decreases over time, and this result reveals that as hydroxide ion (OH⁻) is continuously produced in the reduction reaction tank, the pH increases.

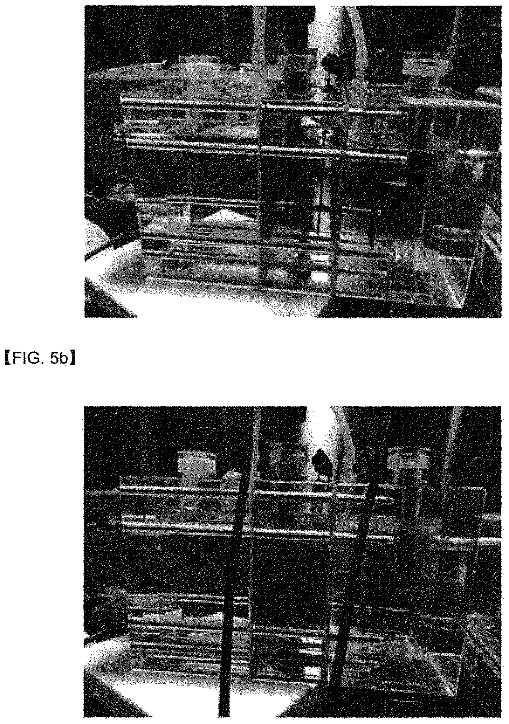

Along with this, describing the ammonia nitrogen concentration in the reduction reaction tank and the ammonia nitrogen concentration in the ammonia recovery tank over time, as shown in the following Tables 1 and 2, it can be seen that ammonia nitrogen in the reduction reaction tank is removed more than 99%, and 100% (20 mA/cm²) of ammonia nitrogen contained in the raw water is recovered in the ammonia recovery tank. The following Table 1 shows changes in ammonia nitrogen concentration in each reaction tank over time when the power of 20 mA/cm² is applied, and Table 2 shows the ammonia nitrogen recovery rate (mass change) of each reaction tank over time when the power of 20 mA/cm² is applied. For reference, FIG. 5A is an image showing the anaerobic digestate effluent in initial condition contained in the reduction reaction tank, and FIG. 5B is an image showing the condition in 5 hours after the power of 20 mA/cm² is applied.

**[Table 1]**

| | Ammonia nitrogen (mg/L) | | | Removal rate (concentration, %) |
|---|---|---|---|---|
| | Oxidation reaction tank | Reduction reaction tank | Ammonia recovery tank | |
| Initial condition | 0 | 1739.60 | 0 | 0 |
| After 1h | 54.45 | 1020.30 | 251.00 | 41.34 |
| After 2h | 55.30 | 707.40 | 523.60 | 59.33 |
| After 3h | 39.00 | 450.25 | 745.20 | 74.11 |
| After 4h | 25.00 | 269.50 | 1176.63 | 84.50 |
| After 5h | 16.50 | 9.10 | 1227.57 | 99.47 |

**[Table 2]**

| | Ammonia nitrogen (g) | | | Recovery rate (weight, %) |
|---|---|---|---|---|
| | Oxidation reaction tank | Reduction reaction tank | Ammonia recovery tank | |
| Initial condition | 0.00 | 0.57 | 0.00 | 0 |
| After 1h | 0.03 | 0.34 | 0.12 | 20.55 |
| After 2h | 0.03 | 0.23 | 0.25 | 42.87 |
| After 3h | 0.02 | 0.149 | 0.35 | 61.01 |
| After 4h | 0.01 | 0.089 | 0.55 | 96.33 |
| After 5h | 0.01 | 0.003 | 0.58 | 100.50 |

### [Detailed Description of Main Elements]

| | | | |
|---|---|---|---|
| 10: | Raw water supply tank | 110: | Oxidation reaction tank |
| 120: | Reduction reaction tank | 130: | Ammonia recovery tank |
| 140: | Cation exchange membrane | 150: | Gas permeable membrane |

## Claims

1. An electrochemical water treatment apparatus for recovering high concentration ammonia nitrogen, comprising:
an oxidation reaction tank, a reduction reaction tank and an ammonia recovery tank arranged adjacent to one another in a sequential order,
wherein a cation exchange membrane is interposed between the oxidation reaction tank and the reduction reaction tank,
wherein a gas permeable membrane is interposed between the reduction reaction tank and the ammonia recovery tank,
wherein the oxidation reaction tank accommodates an oxidation electrode and an electrolyte solution to produce hydrogen ion (H⁺) when power is applied, and
wherein the reduction reaction tank accommodates raw water containing ammonia nitrogen and a reduction electrode to produce hydroxide ion (OH⁻) and convert ammonium ion (NH₄⁺) in the raw water to gaseous ammonia (NH₃) when the power is applied.

2. The electrochemical water treatment apparatus for recovering high concentration ammonia nitrogen according to claim 1, wherein the gaseous ammonia (NH₃) produced in the reduction reaction tank moves to the ammonia recovery tank through the gas permeable membrane.

3. The electrochemical water treatment apparatus for recovering high concentration ammonia nitrogen according to claim 1, wherein the ammonia recovery tank accommodates a recovery solution, and the gaseous ammonia (NH₃) passing through the gas permeable membrane is captured in the recovery solution.

4. The electrochemical water treatment apparatus for recovering high concentration ammonia nitrogen according to claim 3, wherein the recovery solution is a solution containing at least one of phosphoric acid, sulfuric acid or nitric acid, and
wherein the gaseous ammonia (NH₃) passing through the gas permeable membrane is converted to ammonium ion (NH₄⁺) in the recovery solution.

5. The electrochemical water treatment apparatus for recovering high concentration ammonia nitrogen according to claim 1, further comprising:
a raw water supply tank on one side of the reduction reaction tank to supply the raw water containing ammonia nitrogen to the reduction reaction tank.

6. The electrochemical water treatment apparatus for recovering high concentration ammonia nitrogen according to claim 1, wherein the hydrogen ion (H⁺) produced in the oxidation reaction tank moves to the reduction reaction tank through the cation exchange membrane, and
wherein the hydroxide ion (OH⁻) is produced in the reduction reaction tank by a reaction of the following Formula 2, and the gaseous ammonia (NH₃) is produced by a reaction of the following Formula 4:
(Formula 2) O₂ + 2H₂O + 4e⁻ → 4OH⁻
(Formula 4) OH- + NH₄⁺ → NH₃ + H₂O.
